# EUROPÄISCHE PATENTSCHRIFT

(11) **EP 0 822 472 B1**
(45) Veröffentlichungstag und Bekanntmachung des Hinweises auf die Patenterteilung: **13.01.1999**
(21) Anmeldenummer: 97112296.5
(22) Anmeldetag: 17.07.1997
(51) Int. Cl.: G05B 19/05

(54) **Elektronische Steuereinheit, insbesondere Mikrocontroller, mit über Diagnoseschnittstelle änderbarer Zuordnung zwischen Bedienelementen und Eingangsports sowie zwischen Anzeigeelementen und Ausgangsports**
Electronic controller, especially microcontroller, with allocation between input elements and input ports, and between display elements and output ports changable via diagnostic interface
Dispositif de commande electronique, en particulier microcontrolleur, avec allocation modifiable à travers une interface de diagnostic entre élements de commande et ports d'entrée, et entre élements d'affichage et ports de sortie

(30) Priorität: 31.07.1996 DE 19630992
(43) Veröffentlichungstag der Anmeldung: 04.02.1998
(73) Patentinhaber: SIEMENS AKTIENGESELLSCHAFT, 80333 München (DE)
(72) Erfinder: Menten, Frank, Dipl.-Ing., 93055 Regensburg (DE)

(56) Entgegenhaltungen:
- EP-A- 0 706 011
- US-A- 5 213 548

## Beschreibung

Die Erfindung bezieht sich auf eine elektronische Steuereinheit, insbesondere einen Mikrocontroller gemäß Patentanspruch 1; die erfindungsgemäße Steuereinheit soll dabei insbesondere in eine elektronische Herdsteuerung eingesetzt werden.

Die der elektronischen Steuereinheit über Eingangsports von Bedienelementen übermittelten Steuerbefehle, z.B. eingestellte Betriebsarten des Backofens eines Herdes, werden u.a. über an Ausgangsports angeschlossene Anzeigeelemente, insbesondere LCD-Segmente oder LED-Segmente, optisch vermittelt. Je nach kundenspezifischer Ausführung oder je nach technischer oder designerischer Variation müssen unterschiedliche gegenseitige Zuordnungen der Eingangsports zu den Bedienelementen bzw. der Ausgangsports zu den Anzeigeelementen zur Verfügung stehen; um dabei zu gewährleisten, daß jeweils die richtigen Anzeigeelemente durch die elektronische Steuereinheit angesteuert werden, wäre es notwendig, für jede Variante ein individuelles Layout bzw. je Variante eine individuelle Software zu schaffen.

Aus der US 5 213 548 A ist ein Mikrocontroller bekannt, bei dem mehrere Eingangsports Bedienelementen und mehrere Ausgangsports Anzeigeelementen fest zugeordnet sind.

Durch die EP 0 573 827 A2 ist eine elektronische Steuereinheit zur Anwendung bei Haushaltsgeräten bekannt, die dadurch für verschiedene, bereits bei Erst-Installierung festzulegende Varianten einsetzbar ist, daß diese softwaremäßig in der Steuereinheit abgespeichert und jeweils über eine Ansteuerung eines zugehörigen spezifischen Eingangsport abrufbar sind.

Gemäß Aufgabe vorliegender Erfindung soll der Aufwand für eine variable Zuordnung von Bedienelementen zu Eingangsports bzw. von Anzeigeelementen zu Ausgangsports einer elektronischen Steuereinheit, insbesondere in Form eines Mikrocontrollers wesentlich vereinfacht werden.

Die Lösung der vorgenannten Aufgabe gelingt erfindungsgemäß durch die Lehre des Anspruchs 1; vorteilhafte Ausgestaltungen der Erfindung sind jeweils Gegenstand der Unteransprüche.

Erfindungsgemäß wird also nach einer erstmaligen Zuordnung von Bedienelementen zu Eingangsports bzw. von Anzeigeelementen zu Ausgangsports diese Zuordnung in einem nichtflüchtigen Speicher, insbesondere einem EEPROM der Steuereinheit, abgespeichert und dann jede weitere Variante jeweils über eine Diagnoseschnittstelle dem Speicher derart mitgeteilt, daß die elektronische Einheit erfährt, welches Anzeigeelement sich an welchem Ausgangsport und welches Bedienelement sich an welchem Eingangsport befindet. Eine neue Variante kann also bei unverändertem Einsatz einer Universal-Steuereinheit ohne zusätzlichen Layout-Entwicklungsaufwand jederzeit auf einfache Weise durch neue bzw. geänderte Ablage in dem Speicher berücksichtigt werden.

Durch die DE 38 03 920 C2 ist ein Dekoder für Fernsteuerungen mit einem Mikrocomputer und einem nichtflüchtigen Speicher bekannt, wobei bestimmte Sendersignale mit Adress- und Funktionsteil jeweils bestimmten Dekoderausgängen zugeordnet werden können, derart daß nach einer erstmaligen Zuordnung eines Ausgangs das zugehörige Sendersignal übertragen und dessen Adreßteil im Dekoder abgespeichert wird; anschließende Senderbefehle aus einem vorgegebenen Übertragungsformat werden dann hinsichtlich des zugeordneten Dekoderausgangs wiedererkannt.

Durch die DE 41 40 804 C1 ist eine Steuereinrichtung für Heizvorrichtungen mit einem Speicher bekannt, in den u.a. kundenspezifische und/oder gerätespezifische Daten von einer Diagnoseeinrichtung über Diagnoseleitungen einlesbar und dann abspeicherbar sind.

Schließlich ist es durch die DE 44 19 190 Al bekannt, bei einem geräteseitigen Diagnose- und/oder Anzeigesender über die vorhandene Signal- bzw. Meldeleuchte nicht nur ein übliches niederfrequente Signal zu übertragen, sondern durch hochfrequente Aufmodulation weitere Betriebsinformationen aus dem Gerät zu erhalten.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: drei Varianten von hinsichtlich Anzahl bzw. gegenseitiger Anordnung unterschiedlichen Backofen-Anzeigefeldern einer Herdsteuerung;
- FIG 2: eine erste Variante der gegenseitigen Zuordnung von Bedienelementen zu Eingangsports bzw. Anzeigeelementen zu Ausgangsports eines Mikrocontrollers als elektronische Steuereinheit;
- FIG 3: eine zweite, gegenüber der Variante nach FIG 1 hinsichtlich Zahl und Anordnung der Zuordnungen unterschiedliche Variante.

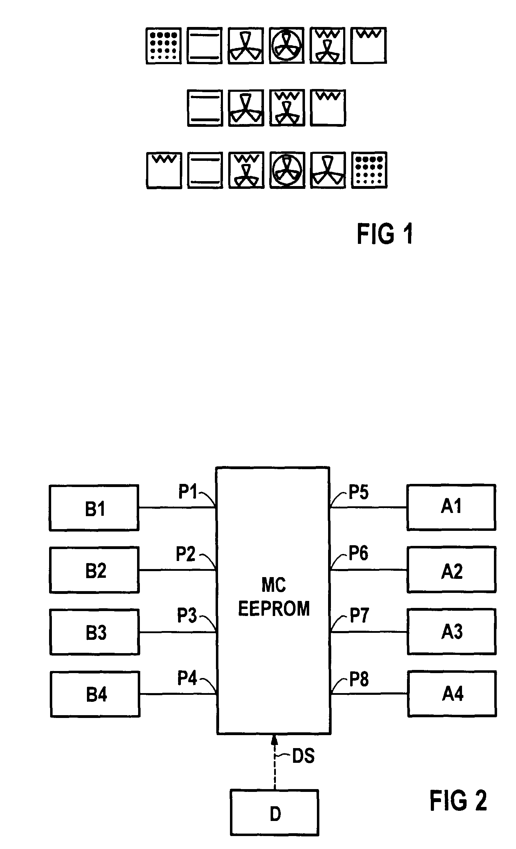

FIG 1 zeigt drei Varianten eines Anzeigefeldes einer Herdsteuerung mit jeweils unterschiedlicher Anzahl und unterschiedlicher gegenseitiger Anordnung von einzelnen Anzeigeelementen von einstellbaren Betriebsarten eines Backofens. Derartige unterschiedliche Anordnungen der Anzeigeelemente können sich aufgrund kundenspezifischer Ausführungen, aus spezifischen Designwünschen oder z.B. aus Umkonstruktionen der Bedien- bzw. Anzeigefelder ergeben.

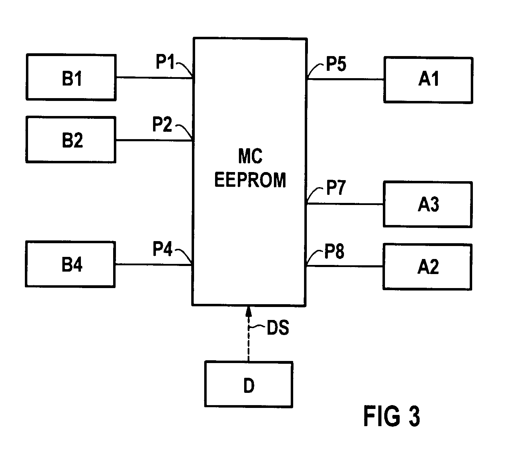

FIG 2 bzw. FIG 3 zeigen jeweils eine als elektronisches Universalbauelement einsetzbare elektronische Steuereinheit in Form eines Mikrocontrollers MC mit einem integrierten nichtflüchtigen Speicher EEPROM. Der Mikrocontroller MC weist jeweils vier Eingangsports P1-P4 und vier Ausgangsports P5-P8 auf. Gemäß der Variante nach FIG 2 sind an die Eingangsports P1-P4 Bedienelemente B1-B4 und an die Ausgangsports P5-P8 Anzeigeelemente A1-A4 angeschlossen. Gemäß der Variante nach FIG 3 fehlen im Unterschied zu der Variante nach FIG 2 ein Bedienelement B3 sowie ein Anzeigeelement A4 und ist das Anzeigeelement A2 nicht an den Ausgangsport P6 sondern an den Ausgangsport P8 angeschlossen; in analoger Weise können Zuordnungen zwischen Bedienelementen und Eingangsports geändert werden.

Es muß nun gewährleistet sein, daß jeweils die richtigen Anzeigeelemente durch die elektronische Einheit entsprechend den jeweils betätigten Bedienelementen angesteuert werden; hierzu muß die elektronische Einheit darüber informiert sein, welches Anzeigeelement sich an welchem Ausgangsport und welches Bedienelement sich an welchem Eingangsport befindet. Dazu ist eine Diagnoseschnittstelle DS mit einer äußeren Diagnoseeinheit D vorgesehen. Die Diagnoseeinheit D kommuniziert mit dem Mikrocontroller MC und dessen nichtflüchtigem Speicher EEPROM in vorteilhafter Weise leitungs- und somit steckerlos, insbesondere mittels einer optoelektronischen Übertragung. Dem Mikrocontroller MC wird, vorzugsweise in der Fertigung, einmalig über die Diagnoseschnittstelle DS mitgeteilt, welches Anzeigeelement A1-A4 sich an welchem Ausgangsport P5-P8 bzw. welches Bedienungselement B1-B4 sich an welchem Eingangsport P1-P4 befindet; diese Information wird im nichtflüchtigen Speicher EEPROM abgelegt.

Bei späteren Varianten, wie z.B. bei einem Vertauschen oder Weglassen von Bedienungs- und Anzeigeelementen aus kundenspezifischen oder Design- bzw. Ergonomiegründen, werden durch die Diagnoseeinheit D über die Diagnoseschnittstelle DS ohne zusätzlichen elektronischen Entwicklungsaufwand auf einfache und flexible Weise dem nichtflüchtigen Speicher EEPROM die neuen Zuordnungen mitgeteilt und in ihm abgelegt.

## Patentansprüche

1. Elektronische Steuereinheit, insbesondere Mikrocontroller,
- mit mehreren Eingangsports (P1-P4) mit jeweils zugeordnetem Bedienelement (B1-B4);
- mit mehreren Ausgangsports (P5-P8) mit jeweils zugeordnetem Anzeigeelement (A1-A4);
- mit einem, insbesondere in dem Mikrocontroller (MC) integrierten, nichtflüchtigen Speicher (EEPROM);
- mit einer Diagnoseschnittstelle (DS), die mit dem Speicher (EEPROM) derart verbunden ist, daß eine Abspeicherung einer Information über eine erstmalig festgelegte gegenseitige Zuordnung der Bedienelemente zu den Eingangsports bzw. der Anzeigeelemente zu den Ausgangsports ermöglicht ist und
- bei einer variantenkonformen Änderung der erstmalig festgelegten Zuordnungen die gespeicherte Information gemäß Vorgabe durch eine äußere, mit der Diagnoseschnittstelle (DS) verbundenen Diagnoseeinheit (D), änderbar ist.

2. Elektronische Steuereinheit nach dem vorhergehenden Anspruch
- bei der die Diagnoseeinheit (D) von außen über die Diagnoseschnittstelle (DS) ankoppelbar ist.

3. Elektronische Steuereinheit nach dem vorhergehenden Anspruch
- mit einer drahtlosen Ankopplung der Diagnoseeinheit (D) an die Steuereinheit, insbesondere den Mikrocontroller (MC).

4. Elektronische Steuereinheit nach dem vorhergehenden Anspruch
- mit einer optoelektronischen Ankopplung der Diagnoseeinheit (D).

5. Verwendung der elektronischen Steuereinheit nach zumindest einem der vorhergehenden Ansprüche in einer Herdsteuerung.

## Claims

1. Electronic control unit, in particular microcontroller,
- having a plurality of input ports (P1-P4) with a respectively allocated operating element (B1-B4);
- having a plurality of output ports (P5-P8) with a respectively allocated display element (A1-A4);
- having a non-volatile memory (EEPROM), which is, in particular, integrated in the microcontroller (MC);
- having a diagnostic interface (DS), which is connected to the memory (EEPROM) in such a way as to enable storage of an information item by way of an initially defined, reciprocal allocation of the operating elements to the input ports and/or of the display elements to the output ports, and
- in the event of a variant-compliant change to the initially defined allocations, the stored information item can be changed in accordance with the specification by means of an external diagnostic unit (D), which is connected to the diagnostic interface (DS).

2. Electronic control unit according to the preceding claim,
- in which the diagnostic unit (D) can be coupled externally via the diagnostic interface (DS).

3. Electronic control unit according to the preceding claim,
- with wire-free coupling of the diagnostic unit (D) to the control unit, in particular the microcontroller (MC).

4. Electronic control unit according to the preceding claim,
- with optoelectronic coupling of the diagnostic unit (D).

5. Use of the electronic control unit according to at least one of the preceding claims in a cooker control.

## Revendications

1. Unité de commande électronique, notamment microcontroleur.
- comportant plusieurs ports (P1 à P4) d'entrée ayant chacun un élément (B1 à B4) d'interface associé;
- comportant plusieurs ports (P5 à P8) de sortie ayant chacun un élément (A1 à A4) d'affichage associé;
- comportant une mémoire (EEPROM) non volatile, notamment intégrée au microcontroleur (MC);
- comportant une interface (DS) de diagnostic, qui est reliée à la mémoire (EEPROM) de telle manière, qu'une mise en mémoire d'une information concernant une première association mutuelle, fixée une première fois, des éléments d'interface aux ports d'entrée et des éléments d'affichage aux ports de sortie est rendue possible, et
- en cas d'une modification conforme à une variante des associations fixées une première fois, l'information enregistrée peut être modifiée, suivant prescription, par une unité D de diagnostic extérieure, reliée à l'interface DS de diagnostic.

2. Unité de commande électronique suivant la revendication précédente,
- dans laquelle l'unité (D) de diagnostic peut être couplée de l'extérieur par l'intermédiaire de l'interface (DS) de diagnostic.

3. Unité électronique suivant la revendication précédente,
- comportant un couplage sans fil de l'unité (D) de diagnostic à l'unité de commande, notamment au microcontroleur (MC).

4. Unité de commande électronique suivant la revendication précédente,
- comportant un couplage optoélectronique de l'unité (D) de diagnostic.

5. Utilisation de l'unité de commande électronique suivant au moins l'une des revendications précédentes dans une commande de cuisinière.
